(19) **Europäisches Patentamt / European Patent Office / Office européen des brevets**

(11) **EP 2 716 905 A1**

(12) **EUROPEAN PATENT APPLICATION**

(43) Date of publication:
**09.04.2014  Bulletin 2014/15**

(51) Int Cl.:
*F03D 1/06* (2006.01)          *F03D 3/00* (2006.01)
*F03D 3/06* (2006.01)

(21) Application number: **12425163.8**

(22) Date of filing: **05.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **E.R. Energie Rinnovabili S.R.L.**
**00187 Roma (IT)**

(72) Inventors:
• **The inventor has agreed to waive his entitlement to designation.**

(74) Representative: **Perronace, Andrea et al**
**Barzano & Zanardo Roma S.p.A.**
**Via Piemonte 26**
**00187 Roma (IT)**

(54) **Rotating blade bodies for turbines using the Magnus effect with rotation axis of the turbine at right angle to the direction of the fluid**

(57)     The present invention relates to a rotating body (10) for turbines using the Magnus effect with an axis of rotation of the turbine parallel to the direction of the working fluid, wherein it is obtained by an ovoid of construction of Rankine-Fuhrman, arranged with major axis ($L_{RL}$) parallel to the axis of rotation of the rotating body (10), said major axis ($L_{RL}$) of the ovoid being equal to 10 times the minor axis ($D_{RL}$), of the same ovoid, the diameter (D) of said rotating body (10) being variable along the axis of rotation of said rotating body (10) up to a maximum value comprised between 1/5 and 1/6 of the length (L) of said rotating body (10), said ovoid of construction of Rankine-Fuhrmann being divided into four sectors obtained dividing the major axis ($L_{RF}$) of the same ovoid into four segments (1, 2, 3, 4) having the same length, the profile of said rotating body being realised, respectively
- following the profile of the second and third sectors into which the ovoid of construction of Rankine-Fuhrmann was divided, i.e. the sectors of the ovoid of Rankine-Fuhrmann corresponding to the second (2) and third (3) segments into which the major axis ($L_{RF}$) of the ovoid was divided,
- following the profile obtained through the combined transposition of the third sector to the second sector into which the ovoid of construction of Rankine-Fuhrmann was divided, so to form two opposing trapezoids, welded along the minor base,
or
- following the profile obtained through the combined transposition of the fourth sector, i.e. the sector of the ovoid of construction corresponding to the fourth segment (4) into which the major axis ($L_{RF}$) of the ovoid was divided, to the first sector, i.e. the sector of the ovoid of construction corresponding to the first segment (1) into which said major axis ($L_{RF}$) of the ovoid was divided, so to form an hourglass, wherein the two sectors are connected, at the respective points of maximum curvature, by means of sections of prolated spheroid, i.e. with surfaces of quadrics of rotation with one flap.

Fig. 6

**Description**

The present invention relates to rotating blade bodies for turbines using the Magnus effect with rotation axis of the turbine at right angle to the direction of the working fluid.

More specifically, the invention concerns the definition of the construction technique of the rotating bodies animated with rotary motion with respect to their longitudinal axis, installed in hydraulic radial turbines operating according to the dynamic effect known as the Magnus effect.

In the text, with the expression radial turbine it is indicated a turbine with an axis of rotation at right angle to the direction of the working fluid.

As is well known, there is a correlation between the spin of a rotating cylinder with respect to its longitudinal axis and the fluid stream which strikes said cylinder in a direction perpendicular to said longitudinal axis. Such a correlation has been described, in 1852 for the first time, by HG Magnus, and for this reason it is called the Magnus effect.

This correlation is highlighted on the lateral skirt of the cylinder with a force, called "lift", in a direction perpendicular to the lines of flow of the fluid stream, and rotated in a clockwise or counterclockwise direction with respect to said stream, depending on the direction of rotation of the cylinder; more in particular it is rotated in a clockwise direction when said cylinder rotates counterclockwise and it is rotated in a counterclockwise direction when said cylinder rotates clockwise.

Quantitatively, the modulus of the lift L (expressed in N/m), per unit length of the cylinder, is given by the equation of Kutta-Joukowski, and is equal to the product of the density of the fluid $\rho$ (expressed in kg/m³), for the asymptotic speed $V_0$ of the fluid threads (expressed in m/s), ie the speed of the fluid threads where the same move undisturbed, and for the circuitry $\Gamma$ (expressed in m²/s).

In formulas, if the cylinder has radius R (expressed in m), the lift due to the Magnus effect is determined by the relation:

$$L \;=\; \rho \cdot V_0 \cdot \Gamma \;=\; \rho \cdot V_0 \cdot 2\pi \cdot \omega \cdot R^2 \;=\; 2\pi \cdot \rho \cdot V_0 \cdot (\omega \cdot R^2)$$

This relation is independent from the shape of the profile, ie it is valid for any profile, by profile being meant the contour of the rotating body along a section plane passing through the rotation axis of the rotating body.

The U.S. patent No. 1,674,169 assigned to the Instituut vor Aero-Hydro-en Dinamiek, inventor Anton Flettner, describes several possible applications of Magnus effect, in particular as "sails" for a boat and as "blades" of a wind generator and presents various alternative embodiments of the rotating bodies, including in particular the cilindric shape (in the patent several boats are shown equipped with a "sail" constituted by a cylindrical rotating body), the ellipsoidal shape (referred to only in a figure relating to a boat without describing its peculiarities) and a shape consisting of two frustoconical portions mutually connected by a cylindrical portion (also in this case without any description that specifies dimensional relationships between these portions).

On the basis of this first patent and other subsequent patents, Flettner installed, on a boat with tonnage of 1000 tons, two Magnus effect rotating cylinders, 2.75m in diameter and 15m high, driven by two electric motors of about 40kW, with a spin of 750rounds/min, and made its maiden voyage leaving from Hamburg (March 31, 1926) and arriving in New York (May 09, 1926) (A. Flettner, "Mein Weg zum Rotor" 1926).

J. Cousteau, in 1985, equips its ocean-going vessel in the same manner as the Flettner rotoship, with a variation due to his own patent.

In 2009, the German Enercon, one of the largest manufacturers of wind turbines, launched a cargo ship, 130m long, 22.5m wide and with 10500 metric tons deadweight (DWT), equipped with four Magnus effect cylinders 25m high and 4m in diameter, to integrate, with a saving of 40%, the traditional propulsion propellers.

Parallel to the development of devices aiming at exploiting the Magnus effect and based on cylindrical bodies rotating around their axis and arranged in a fixed position relative to the ground and more in general with respect to the power plant to which they belong, turbines using the Magnus effect have been developed with axis of rotation of the turbine being parallel or perpendicular to the direction of the working fluid.

Among these, US patent No. 1744924 describes a radial turbine using the Magnus effect, in which a plurality of rotating cylindrical bodies, with axes of rotation parallel to each other, are housed between two frames, arranged on planes parallel to each other and perpendicular to the axes of said rotating bodies, the lift generated by each rotating body being transmitted to the frames and carrying them in rotation about a common axis of rotation, parallel to the axes of rotation of the rotating bodies.

Similar solutions are shown in French Patent No.608280, as well as in the International PCT application No. WO2009/018524, which are also related to radial turbines using the Magnus effect, in which the rotating bodies, always of a cylindrical shape, are arranged between two plates mutually parallel and perpendicular to the axis of said rotating bodies.

In the years between 1930 and 1950, Marco Todeschini studied and experimented the Magnus effect and finally edited "La Teoria delle Apparenze (Spazio-Dinamica & PsicoBiofisica)", published by Istituto Italiano d'Arti Grafiche in Bergamo in 1949, as well as "Psico-Biofisica", Ed. Centro Int. di Psicobiofisica, Bergamo, 1949, setting out an innovative interpretation of Magnus effect based on dynamic considerations and corroborated by experiments made in a ship model basin; determining that the effects of attraction and repulsion which are observed on two cylinders parallel to each other, and due to their rotation about their respective longitudinal axes, are connected to the inertia of the earth: that is, the spin of the Earth.

With the aim to give a more general justification of this theoretical-experimental thesis, it is possible to imagine that a rotating body reached by a fluid moving in a direction transversal with respect to its axis of rotation is driven by inertial forces activated by the Magnus dynamic process, and, in turn, considered and mathematically explained in the theorem of circuitry of Kutta-Joukowsky, revisited according to a relativistic interpretation.

This may reasonably mean that the one-dimensional theory based on a reference system only coaxial with the longitudinal direction of the flow is not sufficient, since it does not consider the rotational movement of the Earth, ie the "Campo Centro-Mosso" (CCM), according to the designation used by Todeschini.

So, to grasp the meaning of Magnus effect, and comprehend its implications, it is necessary to move the observation point in a triad of references located outside the terrestrial triad reference system in order to attribute to the coaxial reference system, as it actually is, two movements of the Earth: its revolution around the Sun and its rotation (spin) around its axis.

In short, to the one-dimensional flow theory, which is limited to consider as active only the longitudinal component of the flow, it is necessary to replace a new dynamic situation, where the Earth intervenes with its contribution projected in the flow direction.

As mentioned above, this contribution can be evaluated only if the observation point is placed on a triad of reference outside of the "Campo Centro-Mosso".

Then, it is possible to say that, between the Magnus effect machine and the "Campo Centro-Mosso", ie the Earth, there is a correspondence without exception between the energy produced (action), and an equal energy (reaction) taken from the "Campo Centro-Mosso".

Accordingly, following the theoretical-experimental analysis of Todeschini, only a working machine according to the Magnus effect in water, by hypothesis considered in this case incompressible, and in hypercritical dynamic regimes, with the Reynolds number of the order of $10^7$, can transform into useful force the potential of the "Campo Centro-Mosso", ie that of the Earth.

However, in machines proposed up to now to exploit the Magnus effect, this important contribution has never been taken into consideration, with the result that the capacity of these machines to take advantage of the Magnus effect is not optimal, ie, from a different point of view, the study and design of these machines, with particular reference to the shape of the rotating bodies, has never been optimized in view of the contribution of the Earth's rotation.

In light of the above, it appears evident the need for Magnus effect machines designed taking into account all the components that affect said effect.

In this context it is included the solution according to the present invention, aiming to provide rotating bodies having peculiar profiles, different from those considered in accordance with the prior art. These rotating bodies are proposed for the construction of wind or hydraulic turbines, operating both in flowing waters and in closed circuits.

In addition to the above justification, by subsequent theoretical and experimental analyses, it is also possible to find more explanations for the generation of energy by the Magnus effect, comparing the theory of inertia with the principles of quantum physics.

Particular importance in this regard have the engineering applications (such as the magnetic levitation train) where it is possible to take advantage of the inhomogeneous magnetic fields and of the gradients of magnetic susceptibility, but also the new interpretation of the "quantum vacuum", considered a supplier of energy and pulses, and, therefore, the connecting element between all bodies in the universe; without forgetting the physics of water.

In particular, according to the present invention, reference is made to the theory of vortex motion in water produced by cylindrical bodies animated by their own spin; this movement being able to generate strong magnetic fields in water, for which the separation surface between the rotating body and the environment a strong pressure gradient is created, resulting in the production of power.

In the range of current technological choices of cylindrical and axial-symmetric rotating shapes, the present invention proposes therefore tp provide significant improvements, both in the field of industrial engineering and as regards the reduction of passive forces, relating to the movement of rotating bodies, thus promoting the increase of power output.

These and other results are obtained according to the present invention suggesting rotating bodies for turbines using the Magnus effect with rotation axis of the turbine at right angle to the direction of the working fluid the profile of which is obtained by making reference to information deemed sure and reliable, and to the experimental results that give the lift of the cylinder as a function of the relationship between the "spin" of the cylinder and the speed of the undisturbed wind, in order to fit, after processing of fluid dynamic parameters, in a configuration built on the profile of ovoidal bodies with precise ratios of length and width, widely experienced in the aviation industry, as regards the coefficients of lift and drag, and in particular on the profile of the ovoid of Rankine-Fuhrmann, applied in the realization of the airships.

In this way it is possible to ensure the reduction of all those terms that subtract power to the axis, such as for example:

- the term due to the friction of the flow on the outer surface of the rotating body;
- the term which expresses the losses of the electric motor that generates the rotation of the rotating bodies;
- the term which expresses the friction losses in the transmission and support members: gearwheels and bearings.

It is also possible to ensure:

- a standard to be applied in industrial production lines;
- a reduction in the energy dissipated and lost in the power lines due to wake vortex separation.

The purpose of the present invention is therefore to provide rotating bodies for turbines using the Magnus effect with rotation axis of the turbine at right angle to the direction of the working fluidwhich allows to overcome the limits of the solutions of the prior art and to obtain the technical results described above.

Further object of the invention is that said rotating bodies can be manufactured with costs substantially limited, both as regards production costs and as regards the costs of management.

Another object of the invention is to provide rotating bodies for turbines using the Magnus effect with rotation axis of the turbine at right angle to the direction of the working fluidthat is substantially simple, safe and reliable.

It is therefore a specific object of the present invention a rotating body for turbines using the Magnus effect with rotation axis of the turbine at right angle to the direction of the working fluidas defined in claim 1 and a turbine using the Magnus effect with rotation axis of the turbine at right angle to the direction of the working fluidas defined in claim 8.

Further characteristics of the rotating body and turbine according to the present invention are defined in the corresponding dependent claims.

The present invention will be now described, for illustrative but not limitative purposes, according to its preferred embodiments, with particular reference to the figures of the accompanying drawings, in which:

- Figure 1 shows an ovoid of Rankine-Fuhrmann, with its construction lines and the indication of its characteristic measures,
- Figure 2 shows the profile of the rotating body for turbines using the Magnus effect with rotation axis at right angle to the direction of the working fluidaccording to a first embodiment of the present invention,
- Figure 3 shows the profile of a rotating body for turbines using the Magnus effect with rotation axis at right angle to the direction of the working fluidaccording to a second embodiment of the present invention,
- Figure 4 shows the profile ofa rotating body for turbines using the Magnus effect with rotation axis at right angle to the direction of the working fluidaccording to a third embodiment of the present invention,
- Figure 5 shows a front view of a portion of the rotor of a turbine using Magnus effect with axis of rotation of the turbine at right angle to the direction of the working fluidrealized using a plurality of rotating bodies having the basic profile of figure 4, and
- Figure 6 shows a perspective view of the turbine of Figure 5.

It is known that the kinetic energy per unit of time of a generic flow tube can be transformed into mechanical work, and this, in turn, into electrical energy.

The theory and experiment in recent years (Badr, H.M., Coutanceau, M., Dennis, S.C.R. and Ménard, C., "Unsteady flow past a rotating circular cylinder at Reynolds numbers 103 and 104", J.Fluid Mech. (1990), vol. 220, 459-484.; M.H. Chou, "Numerical study of vortex shedding from a rotating cylinder immersed in a uniform flow field" Int. J. Numer. Meth. Fluids (2000), vol. 32, 545-567; Y.T. Chew, M. Cheng, S.C. Luo: "A numerical study of flow past a rotating circular cylinder using a hybrid vortex scheme" J.Fluid Mech. (1995), vol.299, pp.35-71; W. M. Swonson "The Magnus effect: A summary of investigation to date", Trans. ASME, D, (1961), vol. 83. No.3,P. 461-470; N.M. Bychkov "Magnus Wind Turbine. 2. Characteristics of rotating cylinder" Thermophysics and Aeromechanics,vol. 12, No.1, 2005; N.M. Bychkov "Magnus wind turbine. 1 Results of model testing" Thermophysics and Aeromechanics, vol. 11, No.4, pgg. 567-580 (2004); L.S. Pan, Y.T. Chew "A general formula for calculating forces on a 2-d arbitrary body in incompressible flow" J. of Fluids and Structures (2002) 16(1), 71-82; Wind tunnel testing to identify the efficiency of Magnus Effect wind and hydraulic turbines (2008, A. Zasso, Politecnico di Milano, Department of Mechanics)) have shown that it is possible to improve the performance of a wind turbine using rotating bodies of particular shape and animated by their own spin to take advantage of the dynamic Magnus effect, whose circulatory lift is regulated by the circuitry equation of Kutta-Joukowsky.

The present invention aims at optimizing the implementation of axial-symmetric rotating bodies, obtained from surfaces of revolution widely experienced in aeronautical engineering, such as the envelope surfaces of airships, and is based in particular on the results of the studies of Todeschini (1949), and more recent researches (Wind tunnel testing to identify the efficiency of Magnus effect wind and hydraulic turbines (2008, A. Zasso, Politecnico di Milano, Department of Mechanical Engineering), ie in particular on experiments relating to the lift, the force normal to the direction of motion, as well as the resistance or "drag", longitudinal and transverse, due to the presence of viscous friction of the medium and the effects of the pressure field on the surface of the body, and finally to the ratio of these two forces, called fluid dynamic efficiency "E".

With regard to the drag, on the reduction of which the present invention is focused, it is possible to distinguish three contributions:

- skin-friction drag, linked to the viscosity of the fluid;
- induced drag, linked to the wingtip vortices;
- form drag or pressure drag, which depends greatly on the shape of the body, the present invention focusing on this last aspect.

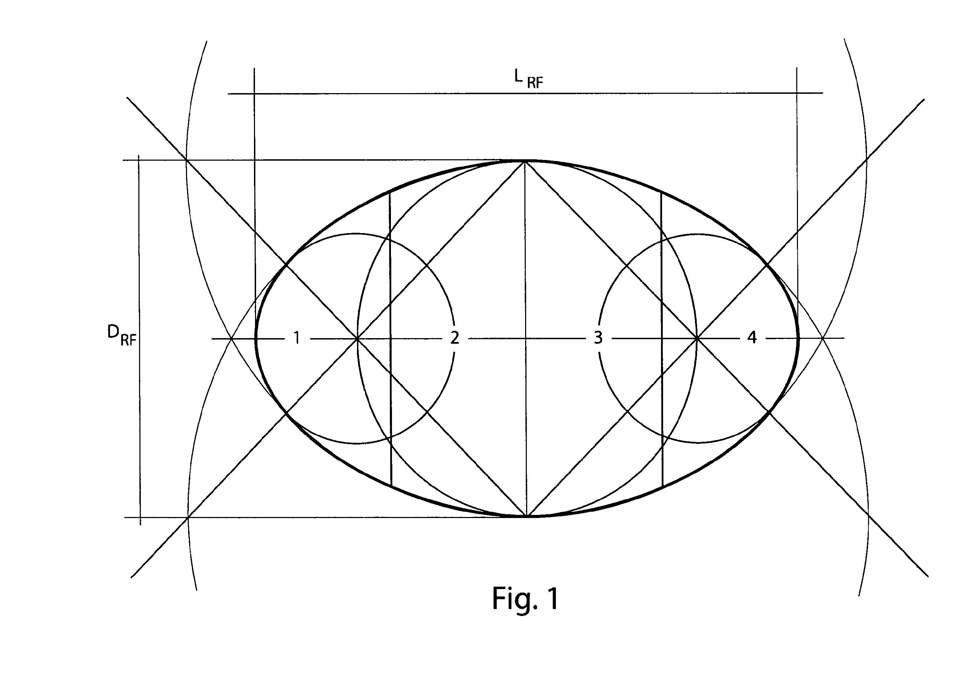

In short, according to the present invention, it is proposed the construction of rotating bodies that, in order to give good results of power are referred, making the relative improvements, to solutions tested and validated with regards to the coefficients of high lift and contained drag, and at the same time to specific aerodynamic and geometric references, accurate and easily reproducible. These requirements have been identified, according to the present invention, in the solid ovoid of Rankine-Fuhrmann, shown with reference to Figure 1, characterized by a ratio between the major axis $L_{RF}$ and the minor axis $D_{RF}$ preferably equal or near 10.

The solid of rotation derived from the oval of Rankine-Fuhrmann has been widely used in the aircraft industry, in the construction of large airships, because its shape has a high coefficient of penetration along the longitudinal axis, and a reduced drag coefficient in the transverse direction.

In the present invention, it is also proposed another important datum, that is the ratio between the length of the rotating body L and the maximum diameter D at the end of the rotating body. This ratio, referred to as optimal aspect ratio, referring to consolidated tests on the field respectively of the Flettner rotoship, the oceanographic ship of Cousteau and the Enercon ship, is made to vary between 5 and 6.

The energy yield of a turbine using the Magnus effect according to the present invention can be further improved by making reference in addition to physical-mathematical studies on aerodynamic forces, pressures and velocities acting on the surface of the rotating body, as well as to specific technological expedients designed to reduce the energy expense of the movement of each rotating body, independently from the others. In particular, the application of these additional design variables allows to guarantee energy yields superior to those obtained by the most modern hydraulic turbines, even in the presence of modest hydrostatic loads, with the contribution of the circuitry of Kutta-Joukowsky, similar to a greater motor hydraulic drop, and of velocity fields of the fluid stream, which, according to the Magnus effect, transform into pressure fields.

According to the present invention, the reference to the theorem of Kutta-Joukowsky is necessary, because because of this it is possible to connect the bearing force acting on a body hit by a fluid stream to the circuitry of the speed along a line that surrounds the body. In short, if the circuitry is null the lift is null, while if the circuitry is different from 0, then the lift is different from 0.

In the following description, the concepts so far anticipated will be treated in detail.

As already mentioned, at the base of the present invention is the choice of a profile of the rotating body shaped on the symmetrical profile of the ovoid of Rankine-Fuhrmann with aspect ratio L/D preferably equal to or close to 10, which in the recent past has been widely used in the construction of airships, as it ensures a low drag coefficient both both the front section that sees the line of flight, and for the cross section while offering a greater area to the lines of side streams.

It is put beforehand that, from the physical point of view, the mechanism which establishes the circulating component of the fluid stream around a profile and gives rise to Magnus effect is due to the action of the viscous force at the limit layer of a real fluid, during the starting phases of motion. Subsequently, once the circulatory movement was created, the stationary motion of the fluid which generates the lift can be studied by means of the description of the incompressible and irrotational streams.

To describe the present invention reference is made to the physical-mathematical modes with which the forms of the bodies are modeled which interact with a fast flowing stream.

The fundamental principle of study used to simulate the dynamic reality of the aerodynamic behavior of a body is the one in which sources and wells interact with a fluid stream animated with uniform motion with asymptotic velocity $V\infty$.

The sources are represented as physical-mathematical point entity, from which a flow springs that spreads in the area crossed by the stream of fluid with uniform motion, while the wells (sinks) are summarized as mathematical-physical point entities where a flow disappears.

In the case in which the stream having uniform velocity V∞ invests only a source of given intensity, it opens upstream of the source, and between the new trajectories of the stream lines the stream line is shown which, starting from a point of stagnation positioned upstream of the source, on an axis z parallel to the stream direction and passing through the source, it is arranged in such a way as to draw an open profile named "semi-infinite ogive of Rankine".

If the fluid stream with asymptotic velocity V∞ first meets a source of assigned intensity and subsequently a sink of equal and opposite intensity, the source and the sink being lined on the z axis, the stream lines open and then close, ie it is possible to obtain two singular points, called points of stagnation, the first upstream of the source and the second downstream of the sink, and a stream line flowing through both and that before and after these points of stagnation coincides with the z axis.

The closed surface, which is obtained by rotating this stream line through 360° about the z axis defines the shape of a three-dimensional axial symmetric body of predetermined length which, located in the considered stream, reproduces exactly the field of motion outside said stream line. That means that the profile of this body, formed by the revolution of the line of stream generated by the presence of the source and of the sink, if entered into the stream flow, does not alter the flow pattern changed by the flow of the source and the sink. A body with this form is called "solid of Rankine" or "ovoid of Rankine."

If the sink is distributed in an infinite sequence of sinks, called "sheet of sinks," such as to absorb point by point the same flow distributed by an infinite number of sources, called "sheet of sources", the body drawn within this combination "sheet of sources" - "sheet of sinks", invested by a plain stream of asymptotic velocity V∞, has a symmetrical profile which is a stream line passing through the points of stagnation. This profile is called "symmetric profile of Rankine-Fuhrmann."

The general equation of that profile, given its difficulty, is solved by iteration speculating each time a value of the flow rate per unit length distributed by the "sheet of sources" and absorbed by the "sheet of sinks", capable of satisfying the integral equation of the profile. This method was developed by Rankine and then applied in a systematic way by Fuhrmann, who determined the forms corresponding to different distributions. The so-called penetrating solids of Fuhrmann were also identified, and this denomination is due to the low drag coefficient that characterizes these solids, because their profiles accompain the stream gradually and consequently have a very contained trail, unlike a bluff body, such as a cylinder, which presents a very large trail, characterized by the presence of vortices which are detached and subtract energy to penetration of the body in the fluid.

To further improve the lift capacity of the rotating body according to the present invention, it is also possible to corrugate its lateral surface, by covering it with small footprints (dimples), such as for the golf ball, with the aim of making the boundary layer turbulent and therefore to reduce the drag.

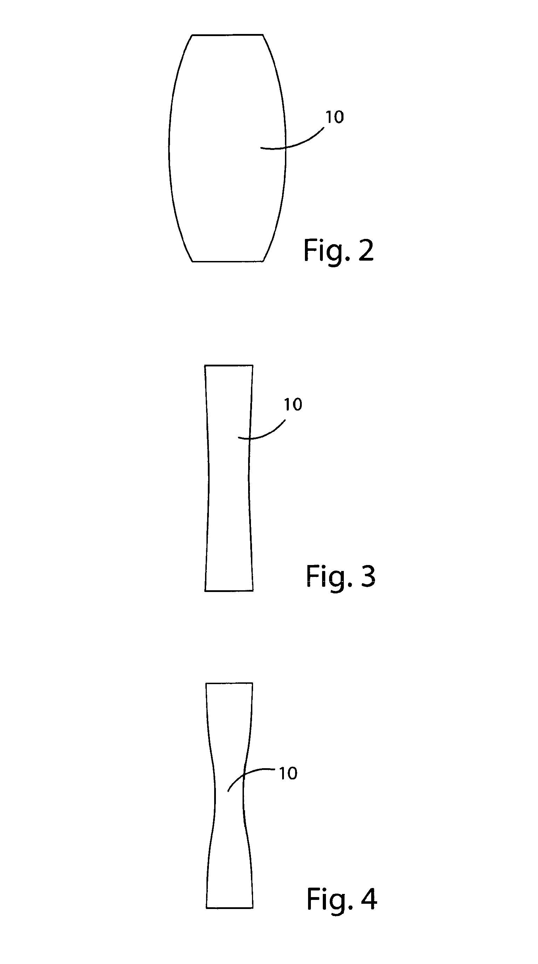

All the foregoing constitutes the theoretical basis underlying the realization of the rotating bodies for turbines using the Magnus effect with axis of rotation of the turbine at right angle to the direction of the working fluidaccording to the present invention and relative turbines, which will be described in more detail in the following description, with particular reference to the embodiments shown in Figures 2-6.

In particular, with reference to Figure 2 it is shown the profile of a rotating body 10 according to a first embodiment of the present invention, specifically designed for using water as working fluid, Figure 3 shows the profile of a rotating body 10 according to a second embodiment of the present invention, specifically designed for using a dense fluid and Figure 4 shows the profile of a rotating body 10 according to a third embodiment of the present invention, specifically designed for using a super dense fluid as working fluid.

In the present invention, the term dense fluid refers to a fluid with dynamic viscosity comparable to that of water and with a density of between 1 and 5 $g/cm^3$ and the term super dense fluid refers to a fluid with dynamic viscosity comparable to that of water and with a density greater than 5 $g/cm^3$.

Specifically, in the present invention, the design of rotating bodies starts from subdivision of the ovoid of Rankine-Fuhrmann into four sectors, obtained by dividing the major axis $L_{RF}$ of the same ovoid into four segments of equal length, said segments being indicated in Figure 1 respectively by the reference numbers 1, 2, 3 and 4. In any case, namely in each of the three embodiments which will be described later, the same proportions $L_{RF}/D_{RF} = 10$ are valid for the ovoid of Rankine-Fuhrmann used for the construction of the segments, in order to optimize the coefficients of lift $C_L$ and drag $C_D$, as well as the form factor $L/D = 5 \div 6$, between the length L of the rotating body and the maximum diameter of the same, proportion that can be found in the Flettner rotoship (1926), in the ocean-going vessel of Cousteau (1985), and in the ship of Enercon (2010).

The height of the rotating body L is then equal to $L_{RF}/2$.

In fact, repeating the above steps that allow drawing the ovoid of Rankine-Fuhrmann that contains in itself the construction of the three embodiments of the rotating bodies, whatever the length L of the project, we have:

Form Factor of the ovoid of Rankine-Fuhrmann:

$$L_{RF}/D_{RF} = 10; \qquad D_{RF} = L_{RF}/10;$$

Form Factor of the rotating body:

$$L/D = 5, \quad D = L/5,$$

As a datum for the project it is set:

$$D_{RF} = D$$

which allows to exploit at the maximum the ovoid of Rankine-Fuhrmann as a solid of construction of the rotating body, in the sense that the greater diameter D of the rotating body is set equal to the maximum possible given the further dimensions of rotating body.

This implies that:

$$L/5 = L_{RF}/10;$$

from which:

$$L_{RF} = L/2.$$

From the data available in literature [Gottingen, Swanson, and others (YT Chew, M. Cheng, SC Luo, "A numerical study of flow past a rotating circular cylinder using a hybrid vortex scheme" J. Fluid Mech., Vol. 229, pp. 35 - 71, 1995)] it is known that the parameter which describes the efficiency of a cylinder and, in general, of any body provided with spin around its longer longitudinal axis reached by a flow with high Reynolds number, is the fluid dynamic efficiency $E = C_L/C_D$, the relationship between the lift coefficient $C_L$ and the drag coefficient $C_D$.

In addition, the experimental results [WM Swanson, "The Magnus effect: A summary of investigation to date", Trans. ASME, D, 1961.Vo1.83 No. 3, P.461/470] obtained in the wind tunnel on cylinders with end disks confirm that the dimensionless ratio $E = C_L/C_D$, when working with high values of Reynolds number, may present higher values than those derived analytically, due to the increase in the real case of the coefficient $C_L$, while the coefficient $C_D$ is reduced.

The lift, instead, is decreasing, as a result of the presence of turbulence which cause the lowering of the pressure difference between the back and the front of the cylinder, where by back it is indicated the part of the cylinder in which the peripheral speed is directed in the opposite direction with respect to the direction of movement of the fluid and by front it is indicated the part of the cylinder in which the peripheral speed is directed in the same direction of the direction of movement of the fluid.

According to the present invention, in the choice of the geometric and functional parameters of rotating bodies, reference is made to the numerical-experimental indications deduced from the study conducted by NM Bychkov ["Magnus Wind Turbine.2. Characteristics of rotating cylinder", Thermophysics and aeromechanics Vo1.12, No.1, 2005], on rotating cylinders of an axial wind turbine using the Magnus effect.

The main parameters that govern the analysis of the study of Bychkov are:

- the Reynolds number, referred to the diameter of the cylinder;
- the aspect ratio of the rotating body L/D, ratio of the length of the rotating cylinder and its diameter;

- the dimensionless speed $\alpha$, ratio between the peripheral speed of the rotating body and the velocity of the undisturbed flow;
- the parameter C, ratio between the diameter of the disc at the end of the cylinder and the diameter of the cylinder.

In the diagrams shown in this publication, it is possible to see how the fluid dynamic efficiency E varies and how the lift and drag coefficients vary with respect to $\alpha$, ie with respect to L/D, and C.

From these analyzes emerges the importance of the parameter C and the aspect ratio L/D in defining the performance of the rotating cylinder turbines, and that in the design of a turbine using the Magnus effect one of the most important problems is to identify the conditions that allow to reduce the drag coefficient of the rotating body.

For this purpose, always from these experimental results, it is shown that it is possible to act on the aspect ratio L/D even if this involves problems from the point of view of construction.

However, when changing the aspect ratio L/D only is not sufficient, it is possible to refer to estimates derived from experimental references, which indicate that it is possible to achieve optimal solutions by making changes to the shape of the rotating bodies.

Starting from this important observation, it is developed the solution according to the present invention wherein in the configurations deduced from the ovoid of Rankine-Fuhrmann with $L_{RF}$/D 10 it is identified the possibility of reduction of the drag coefficients, by reason of the guarantees that are given by the large number of experimental applications in real-world units, such as airships, the forms of which reproduced the profile of the oval of Rankine-Fuhrmann with $L_{RF}$/D = 10.

In particular, after having chosen to realize the rotating bodies according to the present invention following the profile of the ovoid of Rankine-Fuhrmann, as well as after dividing this ovoid of construction into four sectors, obtained by subdividing the major axis $L_{RF}$ into four equal parts, depending on the characteristics of the working fluid the optimum shape of the rotating body is obtained through the following considerations.

With reference to Figure 2, in the case where water is used as working fluid, to take advantage of the maximum useful work surface, the profile of the rotating body 10 is realised following the profile of the second and the third sectors into which the ovoid of construction of Rankine-Fuhrmann has been divided, i.e. the sectors of the ovoid of Rankine-Fuhrmann corresponding to the segments indicated in Figure 1 by the reference numbers 2 and 3, which are those with greater values of diameter.

With reference to Figure 3, in the case where a dense fluid is used as working fluid, to continue to take advantage of the maximum useful surface of work, at the same time limiting the drag of the rotating body in the portion in which the same is the most stressed by the fluid that reaches it, i.e. in correspondence of half of its length, the profile of the rotating body 10 is still realised following the profile of the second and the third sector into which the ovoid of construction of Rankine-Fuhrmann has been divided, in this case by reversing their mutual position so as to form two opposing trapezoids, welded along the minor base, such form being in other words obtained through the combined transposition (permutation) of the third sector to the second sector.

With reference to Figure 4, in the case where a super dense fluid is used as working fluid, it becomes essential to further reduce the drag of the rotating body in the portion in which the same is the most stressed by the fluid that reaches it, i.e. in correspondence of half of its length, the profile of the rotating body 10 is realised following the profile of the first and fourth sectors in which the ovoid of construction of Rankine-Fuhrmann has been divided, i.e. the sectors corresponding to the segments indicated in Figure 1 by the reference numbers 1 and 4, reversing their reciprocal position so as to form an hourglass, thus formed by the combined transposition (permutation) of the last sector to the first sector and welded together at the point of maximum curvature, where they are connected by means of sections of prolated spheroid, i.e. with surfaces of quadrics of rotation with one flap. It is evident that, according to this embodiment, the space available to the passage of the fluid is greater, in this way being avoided that the fluid itself can subject the rotating body to overstressing.

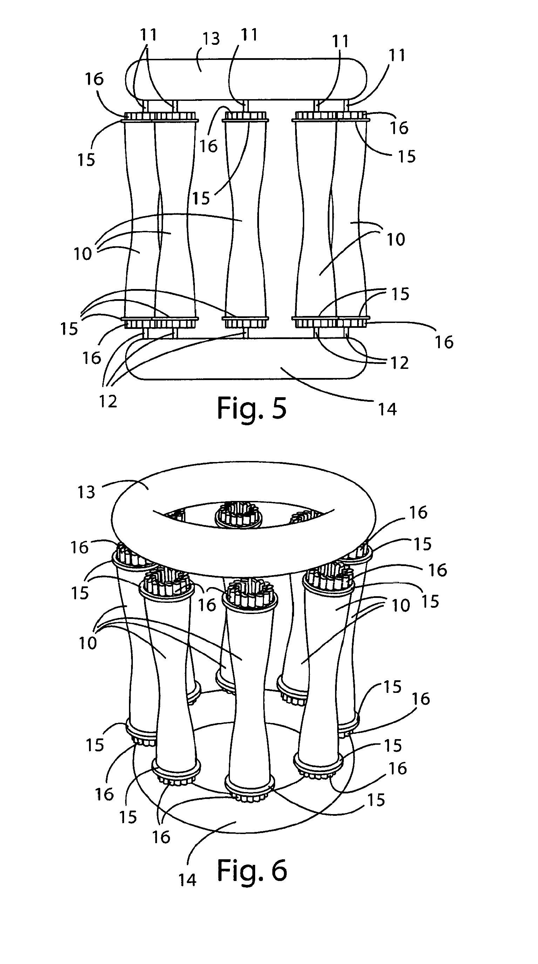

With reference to Figures 5 and 6, by way of non limitative example it is shown the portion of the rotor of a radial turbine using the Magnus effect provided with a plurality of rotating bodies according to the embodiment of the present invention shown in Figure 4 and specifically proposed for use with a super dense working fluid. This does not exclude that the same configuration can be applied also with rotating bodies 10 made according to the embodiments shown in Figures 2 and 3.

In particular, in Figures 5 and 6, the upper 11 and lower 12 bases of each of the rotating bodies 10, preferably equal in number to eight, which form the portion of the rotor of a turbine using the Magnus effect according to the present invention, are carefully secured to two respective connecting rings 13, 14 which have, in their interior, seats designed and equipped to allow the various rotation speed schemes around its own axis.

All rotating bodies 10, due to the Magnus effect, are solicited by a force that moves the connecting rings 13, 14, determining a motor torque on the central axis of the rings themselves, in turn connected with a drive of electrical power, or an alternator (not shown).

To ensure that all the rotating bodies 10 are moved by a thrust which transfers to the central axis a torque that is added positively with that derived from the other rotating bodies, the same must be invested by the fluid vein in a radial direction with respect to the central axis, i.e. guided and regulated by the presence of a suitable distributor (not shown).

To enable continuity in the operation and limitation of energy expenditure due to the movements, in spite of this entails greater constructive difficulties, it is also convenient to equip each rotating body with its own motor member of rotation around its own axis, at variable speed to cover the range of work and in perfect synchronism with the others, by means of individual multipolar motors with variable number of revolutions.

The scheme of spin chosen, i.e. the speed of rotation of the rotating bodies around their axis is governed by process considerations on energy, the analytical relations of which contain the geometrical-functional parameters that govern the realization phase of the executive project.

Moreover, referring to Figures 5 and 6, the rotating body 10 is completed by two end disks 14, with a diameter greater than the diameter of the rotating body, equipped, on their side directed towards the outside, with a series of blades 15, shaped so as to capture energy from the flow generating a thrust through which they participates to the movement of the spin of the rotating body 10, thus reducing the energy expense of the engines dedicated to the rotation of the same rotating bodies.

The end plate 14 and the winglets 15 are an adaptation of improvement compared to the previous embodiments of the ends (Flettner rotoship; N.M. Bychkov "Magnus Wind Turbine. 2. Characteristics of rotating cylinder" Thermophysics and Aeromechanics, vol. 12, No.1, 2005). In particular, the end plate has the task to increase the lift of the rotating body, reducing the vorticity of the fluid threads of the extremities, and its diameter is equal to k·D, where k depends on the ratio between the spin velocity of the rotating body and the resultant velocity $V_R$ incident on the rotating body, vector sum of the undisturbed velocity $V\infty$ of the fluid interacting and the peripheral velocity of the peripheral end of the turbine-wheel: $V_R^2 = V\infty^2 + \Omega^2 \cdot R^2$. In particular, k is preferably comprised between 1,25 and 1,3, and more preferably it is equal to 1,3.

It is important to repeat two aspects of the decisive stage of movement of the rotating bodies.

The first aspect is that the expense of spin is invariant with respect to the speed of the fluid that invests the rotating ovoids, as it is apparent from repeated experimental cycles.

The second aspect concerns the fact that, in order to allow continuity in the operation and limitation in energy expense due to the movements, it is convenient to equip each rotating body of a motor member of its own rotation around its own axis, at variable speed to cover the working range, despite it involves more difficult construction.

The present invention has been described for illustrative but non limitative purposes, according to its preferred embodiments, but it is to be understood that variations and/or modifications can be apport by those skilled in the art without departing from the relevant scope of protection, as defined by the appended claims.

**Claims**

1. Rotating body (10) for turbines using the Magnus effect with an axis of rotation of the turbine parallel to the direction of the working fluid, **characterised in that** it is obtained by an ovoid of construction of Rankine-Fuhrman, arranged with major axis ($L_{RL}$) parallel to the axis of rotation of the rotating body (10), said major axis ($L_{RL}$) of the ovoid being equal to 10 times the minor axis ($D_{RL}$), of the same ovoid, the diameter (D) of said rotating body (10) being variable along the axis of rotation of said rotating body (10) up to a maximum value comprised between 1/5 and 1/6 of the length (L) of said rotating body (10), said ovoid of construction of Rankine-Fuhrmann being divided into four sectors obtained dividing the major axis ($L_{RF}$) of the same ovoid into four segments (1, 2, 3, 4) having the same length, the profile of said rotating body being realised, respectively

   - following the profile of the second and third sectors into which the ovoid of construction of Rankine-Fuhrmann was divided, i.e. the sectors of the ovoid of Rankine-Fuhrmann corresponding to the second (2) and third (3) segments into which the major axis ($L_{RF}$) of the ovoid was divided,
   - following the profile obtained through the combined transposition of the third sector to the second sector into which the ovoid of construction of Rankine-Fuhrmann was divided, so to form two opposing trapezoids, welded along the minor base,

   or

   - following the profile obtained through the combined transposition of the fourth sector, i.e. the sector of the ovoid of construction corresponding to the fourth segment (4) into which the major axis ($L_{RF}$) of the ovoid was divided, to the first sector, i.e. the sector of the ovoid of construction corresponding to the first segment (1) into which said major axis ($L_{RF}$) of the ovoid was divided, so to form an hourglass, wherein the two sectors are connected, at the respective points of maximum curvature, by means of sections of prolated spheroid, i.e. with surfaces of quadrics of rotation with one flap.

2. Rotating body (10) according to claim 1, **characterised in that** it comprises at its ends an end disk (15), having a diameter greater than the larger diameter of said rotating body (10).

3. Rotating body (10) according to claim 2, **characterised in that** said end disk (15) has a diameter between 1,2 and 1,3 times said larger diameter of said rotating body (10) and preferably equal to 1,3 times said larger diameter of said rotating body (10).

4.   Rotating body (10) according to any one of the preceding claims, **characterised in that** it comprises at its ends a series of blades (16) shaped so as to generate a thrust which contribute to the rotation of said rotating body (10) around its own axis.

5.   Rotating body (10) according to any one of the preceding claims, **characterized in that** its lateral surface presents a series of dimples.

6.   Turbine using Magnus effect (20) with an axis of rotation at right angle to the direction of the working fluid, **characterised in that** it comprises a plurality of rotating bodies (10) as defined in claims 1 - 5.

7.   Turbine using Magnus effect according to claim 6, **characterised in that** said rotating bodies (10) are in a number of 8.

Fig. 1

Fig. 2

Fig. 3

Fig. 4

Fig. 5

Fig. 6

Europäisches
Patentamt

European
Patent Office

Office européen
des brevets

## EUROPEAN SEARCH REPORT

**Application Number**

EP 12 42 5163

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SU 1 507 646 A1 (LE I KORABLE STR [SU]) 15 September 1989 (1989-09-15) * figures 1-3 * * column 2, line 2 - column 3, line 20 * ----- | 1-7 | INV. F03D1/06 F03D3/00 F03D3/06 |
| A | GB 243 756 A (PAUL ADALBERT ROSCHER) 3 June 1926 (1926-06-03) * figure 4 * * page 1, line 9 - line 67 * * page 2, line 32 - line 37 * ----- | 1-7 | |
| A | US 1 041 825 A (LOW CHARLES J [US]) 22 October 1912 (1912-10-22) * figures 1,2 * * page 1, line 22 - line 30 * * page 1, line 97 - line 107 * ----- | 1-7 | |
| A | US 2007/046029 A1 (MURAKAMI NOBUHIRO [JP] ET AL) 1 March 2007 (2007-03-01) * figures 1,5,6,11 * * paragraphs [0122] - [0125], [0135] - [0137] * ----- | 3-5 | TECHNICAL FIELDS SEARCHED (IPC) F03D B63H |

The present search report has been drawn up for all claims

| Place of search | Date of completion of the search | Examiner |
|---|---|---|
| The Hague | 11 March 2013 | Rakotonanahary, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 716 905 A1

**ANNEX TO THE EUROPEAN SEARCH REPORT
ON EUROPEAN PATENT APPLICATION NO.** EP 12 42 5163

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2013

| Patent document cited in search report | Publication date | Patent family member(s) | Publication date |
|---|---|---|---|
| SU 1507646 A1 | 15-09-1989 | NONE | |
| GB 243756 A | 03-06-1926 | NONE | |
| US 1041825 A | 22-10-1912 | NONE | |
| US 2007046029 A1 | 01-03-2007 | AU 2004315175 A1 | 18-08-2005 |
| | | BR PI0418484 A | 19-06-2007 |
| | | CA 2552297 A1 | 18-08-2005 |
| | | CN 1846056 A | 11-10-2006 |
| | | EP 1715181 A1 | 25-10-2006 |
| | | HK 1092515 A1 | 23-07-2010 |
| | | JP 3962755 B2 | 22-08-2007 |
| | | KR 20060035626 A | 26-04-2006 |
| | | RU 2330988 C2 | 10-08-2008 |
| | | US 2007046029 A1 | 01-03-2007 |
| | | WO 2005075820 A1 | 18-08-2005 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1674169 A
- US 1744924 A
- FR 608280
- WO 2009018524 A

### Non-patent literature cited in the description

- **A. FLETTNER.** *Mein Weg zum Rotor,* 1926
- La Teoria delle Apparenze. Istituto Italiano d'Arti Grafiche in Bergamo, 1949
- Psico-Biofisica. 1949
- **BADR, H.M. ; COUTANCEAU, M. ; DENNIS, S.C.R. ; MÉNARD, C.** Unsteady flow past a rotating circular cylinder at Reynolds numbers 103 and 10. *J.Fluid Mech.,* 1990, vol. 220, 459-484
- **M.H. CHOU.** Numerical study of vortex shedding from a rotating cylinder immersed in a uniform flow field. *Int. J. Numer. Meth. Fluids,* 2000, vol. 32, 545-567
- **Y.T. CHEW ; M. CHENG ; S.C. LUO.** A numerical study of flow past a rotating circular cylinder using a hybrid vortex scheme. *J.Fluid Mech.,* 1995, vol. 299, 35-71
- **W. M. SWONSON.** The Magnus effect: A summary of investigation to date. *Trans. ASME, D,* 1961, vol. 83 (3), 461-470
- **N.M. BYCHKOV.** Magnus Wind Turbine. 2. Characteristics of rotating cylinder. *Thermophysics and Aeromechanics,* 2005, vol. 12 (1
- **N.M. BYCHKOV.** Magnus wind turbine. 1 Results of model testing. *Thermophysics and Aeromechanics,* 2004, vol. 11 (4), 567-580
- **L.S. PAN ; Y.T. CHEW.** A general formula for calculating forces on a 2-d arbitrary body in incompressible flow. *J. of Fluids and Structures,* 2002, vol. 16 (1), 71-82
- **A. ZASSO.** Politecnico di Milano. Department of Mechanical Engineering, 2008
- **YT CHEW ; M. CHENG ; SC LUO.** A numerical study of flow past a rotating circular cylinder using a hybrid vortex scheme. *J. Fluid Mech.,* 1995, vol. 229, 35-71
- **WM SWANSON.** The Magnus effect: A summary of investigation to date. *Trans. ASME, D,* 1961, vol. 83 (3), 461, 470
- **NM BYCHKOV.** Magnus Wind Turbine.2. Characteristics of rotating cylinder. *Thermophysics and aeromechanics,* 2005, vol. 12 (1